# EUROPEAN PATENT SPECIFICATION

(11) **EP 2 841 703 B1**
(45) Date of publication and mention of the grant of the patent: **14.07.2021**
(21) Application number: 13781870.4
(22) Date of filing: 19.04.2013
(51) Int. Cl.: F01D 5/12, F01D 5/18, F01D 9/00, F02C 7/12, B22F 5/10, B22C 7/02, B22C 9/04, B22C 9/10, B22F 3/105, C22C 28/00, B22C 9/24, B33Y 10/00, B33Y 80/00, B22F 10/20

(54) **GAS TURBINE ENGINE AIRFOIL GEOMETRIES AND CORES FOR MANUFACTURING PROCESS**
GEOMETRIEN FÜR GASTURBINENMOTORSCHAUFELN UND KERNE FÜR HERSTELLUNGSVERFAHREN
GÉOMÉTRIES D'AUBES DE TURBINE À GAZ ET NOYAUX POUR PROCESSUS DE FABRICATION

(30) Priority: 24.04.2012 US 201213454221
(43) Date of publication of application: 04.03.2015
(73) Proprietor: Raytheon Technologies Corporation, Farmington, CT 06032 (US)
(72) Inventor: PROPHETER-HINCKLEY, Tracy A., Manchester, Connecticut 06042 (US); ZELESKY, Mark F., Bolton, Connecticut 06043 (US); MONGILLO, JR., Dominic J., West Hartford, Connecticut 06107 (US); DEVORE, Matthew A., Cromwell, Connecticut 06416 (US); GAUTSCHI, Steven Bruce, Naugatuck, Connecticut 06770 (US); FISK, Benjamin T., East Granby, Connecticut 06026 (US)
(74) Representative: Dehns
(86) International application number: PCT/US2013/037356
(87) International publication number: WO 2013/163032

(56) References cited:
- EP-A2- 2 551 041
- US-A- 5 250 136
- US-A1- 2007 044 933
- US-A1- 2007 114 001
- US-A1- 2007 261 814
- US-A1- 2008 226 462
- US-A1- 2009 229 780
- US-A1- 2010 003 142
- US-A1- 2010 025 001
- US-A1- 2010 206 512
- US-A1- 2010 232 946
- US-B1- 7 568 887

## Description

### BACKGROUND

This disclosure relates to an airfoil for a gas turbine engine. In particular, the disclosure relates to airfoil geometry and cooling features and an example core manufacturing process that produces a core providing such features.

Airfoils, particularly those used in a hot section of a gas turbine engine, incorporate internal cooling features. Current airfoil manufacturing techniques limit possible cooling configurations. Typically, the airfoil is cast within a mold having at least first and second portions secured to one another to define an exterior airfoil surface. The core structure used to form the impingement holes and cooling passages must be retained between the mold portions, which limits the location and configuration of the core, which is quite fragile. The core is typically assembled from multiple elements constructed from different material. The elements are glued to one another through a painstaking assembly process, which may result in scrapped cores.

Core elements of 0.30 - 0.76mm (0.012 -0.030 inch) may be used to produce microcircuits. These core elements must be glued to other core elements of at least 1.52 mm (0.060 inch). A channel in the thicker element must be provided to receive an end of the thinner element, which also results in an abrupt transition with no taper, bell mouth or smooth transition.

US 2007/0114001 A1 discloses a core for an airfoil according to the preamble of claim 1.

Further prior art cores for an airfoil are disclosed in US 2007/044933, US 2009/229780 A1, US 2010/206512 A1 and US 2007/0261814 A1.

### SUMMARY

In accordance with the invention, there is provided a core for an airfoil as claimed in claim 1.

In an embodiment of the above, the structure includes molybdenum.

In a further embodiment of any of the above, the structure is defined by an exterior surface providing a contour, the exterior surface including a uniform surface finish.

In a further embodiment of any of the above, the structure includes a radiused edge.

In a further embodiment of any of the above, exterior surface is without machining.

In a further embodiment of any of the above, a coating is adhered to the exterior surface.

In a further embodiment of any of the above, the structure is defined by an exterior surface including a perimeter, and includes a recess inboard of the perimeter.

In a further embodiment of any of the above, the structure is defined by an exterior surface including a perimeter, and includes a protrusion inboard of the perimeter.

In a further embodiment of any of the above, the first portion is greater than 0.51 mm (0.020 inch).

In a further embodiment of any of the above, one of the first and second portions has a thickness of less than 1.52 mm (0.060 inch).

In accordance with the invention, there is also provided a method of manufacturing a refractory metal core for an airfoil as claimed in claim 11.

### BRIEF DESCRIPTION OF THE DRAWINGS

The disclosure can be further understood by reference to the following detailed description when considered in connection with the accompanying drawings wherein:
Figure 1 is a schematic view of a gas turbine engine incorporating the disclosed airfoil.
Figure 2A is a perspective view of the airfoil having the disclosed cooling passage.
Figure 2B is a plan view of the airfoil illustrating directional references.
Figure 3A is a partial cross-sectional view of an example core.
Figure 3B is a perspective view of a portion of an airfoil with the core of Figure 3A.
Figure 3C is a perspective view of the airfoil of Figure 3B without the core.
Figure 3D is a cross-sectional view of the airfoil of Figure 3C.
Figure 4 is a perspective view of another example core.
Figure 5A is a cross-sectional view of a portion of another example core and airfoil.
Figure 5B is a cross-sectional view of the airfoil shown in Figure 5A without the core.
Figure 6A is a cross-sectional view of another example core and airfoil.
Figure 6B is a perspective view of a portion of the core shown in Figure 6A.
Figure 7 is a cross-sectional view of another example core and airfoil.
Figure 8 is a cross-sectional view of another example core and airfoil.
Figure 9 is a flow chart depicting an example refractory metal core manufacturing process.
Figure 10 is a flow chart depicting an example airfoil manufacturing process.

### DETAILED DESCRIPTION

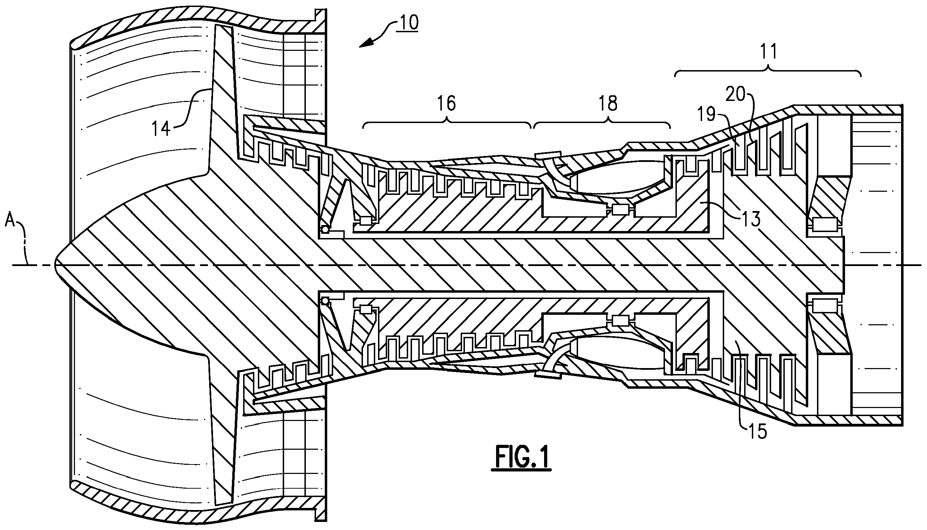

Figure 1 schematically illustrates a gas turbine engine 10 that includes a fan 14, a compressor section 16, a combustion section 18 and a turbine section 11, which are disposed about a central axis A. As known in the art, air compressed in the compressor section 16 is mixed with fuel that is burned in combustion section 18 and expanded in the turbine section 11. The turbine section 11 includes, for example, rotors 13 and 15 that, in response to expansion of the burned fuel, rotate, which drives the compressor section 16 and fan 14.

The turbine section 11 includes alternating rows of blades 20 and static airfoils or vanes 19. It should be understood that Figure 1 is for illustrative purposes only and is in no way intended as a limitation on this disclosure or its application.

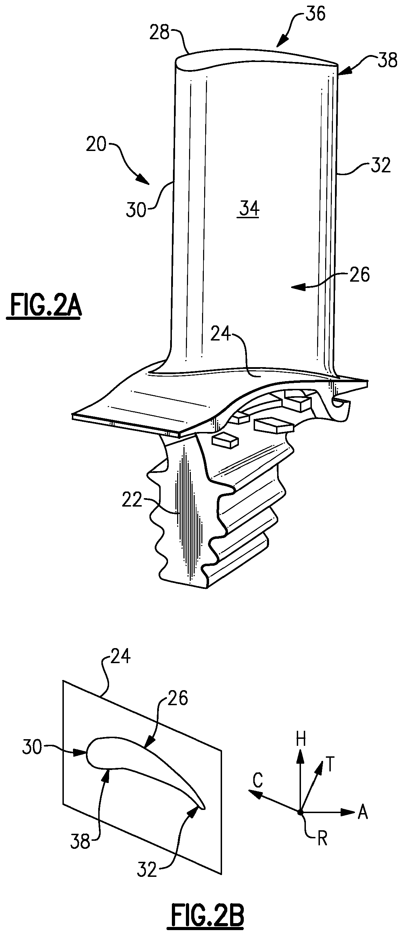

An example blade 20 is shown in Figure 2A. The blade 20 includes a platform 24 supported by a root 22, which is secured to a rotor, for example. An airfoil 26 extends radially outwardly from the platform 24 opposite the root 22 to a tip 28. While the airfoil 26 is disclosed as being part of a turbine blade 20, it should be understood that the disclosed airfoil can also be used as a vane.

Referring to Figure 2B, the airfoil 26 includes an exterior airfoil surface 38 extending in a chord-wise direction C from a leading edge 30 to a trailing edge 32. The airfoil 26 extends between pressure and suction sides 34, 36 in an airfoil thickness direction T, which is generally perpendicular to the chord-wise direction C. Multiple airfoils 26 are arranged circumferentially in a circumferential direction H. The airfoil 26 extends from the platform 24 in a radial direction R to the tip 28. The exterior airfoil surface 38 may include multiple film cooling holes.

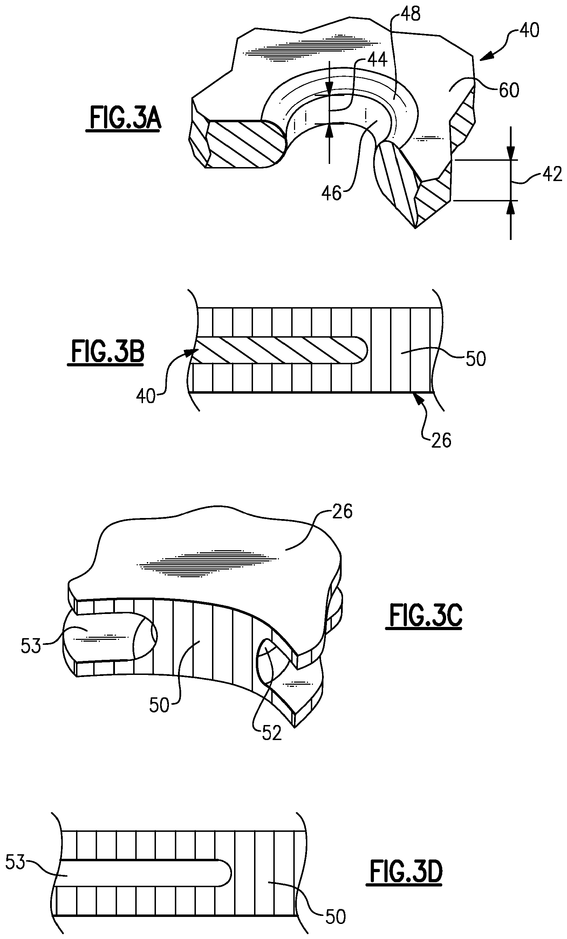

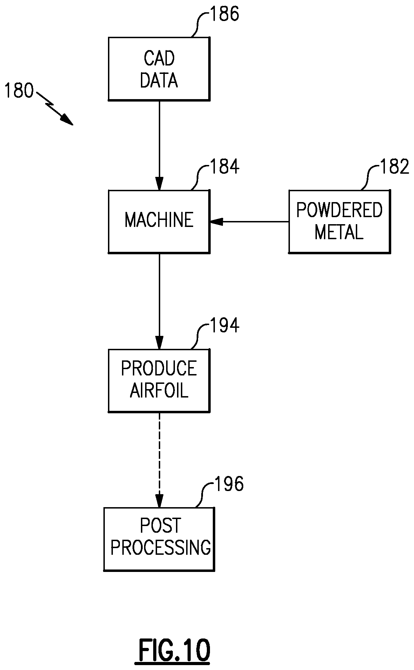

An example core 40 and resultant airfoil 26 is shown in Figures 3A-3D. As described in relation to Figure 10, the airfoils disclosed may also be manufactured directly without the need of a core. In direct airfoil manufacturing, the airfoil features described as being provided by a core can be provided in the airfoil during the airfoil forming process.

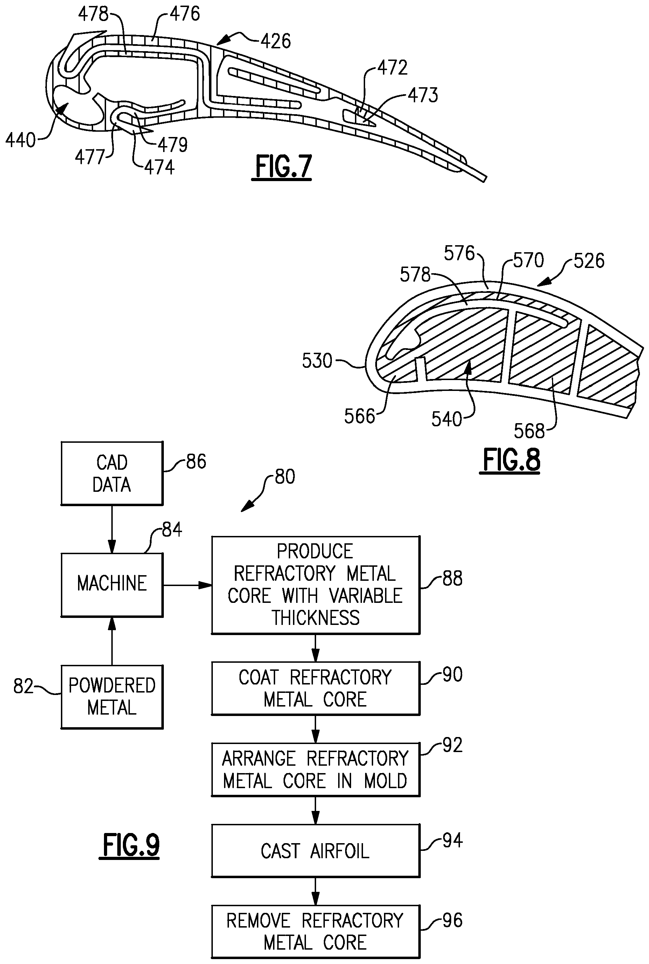

The core 40 is provided by a refractory metal structure, constructed from molybdenum, for example, having a variable thickness. The core 40 is defined by an exterior surface 60 providing a contour. The exterior surface 60 including a uniform surface finish from the core manufacturing process, described in connection with Figure 9 below, which results in a surface roughness to which suitable coatings will adhere. The exterior surface 60 is without machining, that is, milling, chemical etch, filing, or sanding. However, the exterior surface 60 may be finished in a slurry. As a result, coatings will adhere to the edges of the core 40.

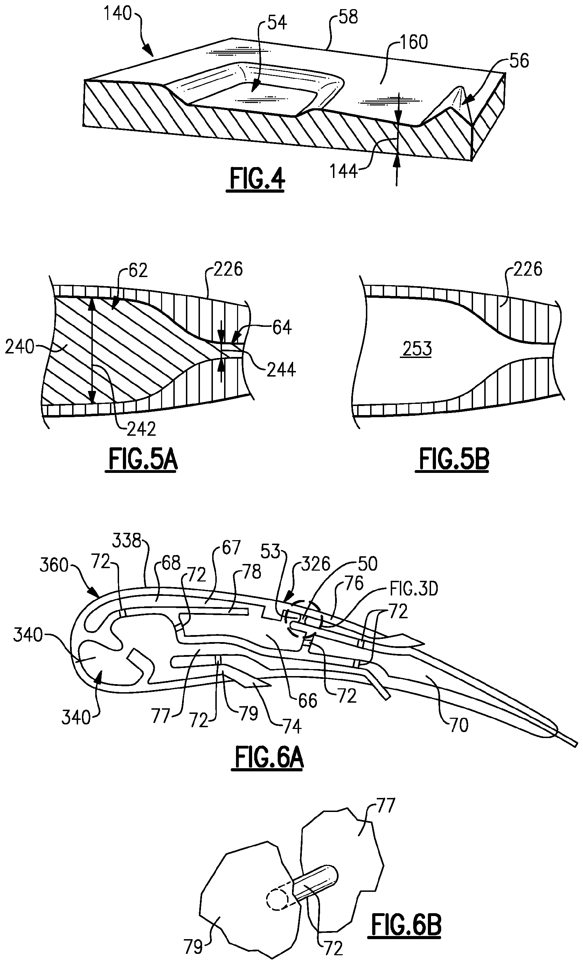

In the example, first and second thicknesses 42, 44 are different than one another. In one example, the first thickness 42 is less than 1.52 mm (0.060 inch). The core 40 may include an aperture 46 with a radiused edge 48 providing the second thickness 44 of less 0.51 mm (0.020 inch), for example. The cast airfoil 26 provides a cooling passage 53 and standoff 50 corresponding to the aperture 46. The standoff 50 illustrated in Figure 3D is shown in the area indicated in Figure 6A.

Referring to Figure 4, the core 140 includes an exterior surface 160 having a perimeter 58. A recess 54 may be arranged inboard of the perimeter 58, for example. In another example, a protrusion 56 is arranged inboard of the perimeter 58. The recess 54 and protrusion 56 are not machined. The thickness of the core 140 surrounding the recess 54 and protrusion 56 is less than 1.52 mm (0.060 inch) in one example, and less than 0.51 mm (0.020 inch) in another example.

In another example shown in Figures 5A-5B, the core 240 may be used to produce an airfoil 226 including a cooling passage 253 having a tapered wall. The core 240 is tapered between first and second portions 62, 64 with the second portion 64 having a second thickness 244 less than 0.51 mm (0.020 inch). The first portion 62 has a first thickness 242 that is greater than 0.51 mm (0.020 inch).

Referring to Figures 6A-6B, which depicts a core within an airfoil, the exterior airfoil surface 360 is defined by a perimeter wall 76. First, second and third cooling passages 66, 68, 70 are provided within the airfoil 326, for example. An interior wall 78 is arranged interiorly and adjacent to the perimeter wall 76 to provide the second cooling passage 67, for example. A cooling passage, for example, first cooling passage 66 is tapered and respectively has different thickness, for example, as described above with respect to Figures 5A and 5B. At least one of the passages, for example, second passage 67, may include a thickness less than 1.52 mm (0.060 inch). The cooling passages are formed by correspondingly shaped core structure. The core 340 is provided by a unitary structure having uniform material properties. That is, multiple core elements constructed from different core materials glued to one another need not be used.

The core 340 includes first and second portions 77, 79 overlapping one another. The first and second portions 77, 79 are less than 1.52 mm (0.060 inch) thick, in one example, and of varying thickness. At least one of the first and second portions 77, 79 may provide a film cooling hole 74 in the exterior airfoil surface 360. The first and second portions 77, 79 are joined to one another by a standoff 72 that produces a hole interconnecting the resultant overlapping cooling passages. Standoffs 72 can be used to integrally connect and join all passages 66, 68, 70 to eliminate the need for core assembly and better stabilize the core during casting. However, directly manufacturing the airfoil, as shown in Figure 10, would not require these features.

Similarly, a unitary body having uniform material properties throughout the structure provides the cores 440, 540 shown in Figures 7 and 8. The core 440, 540 have at least one portion with a thickness of less than 1.52 mm (0.060 inch). Referring to the airfoil 426 of Figure 7, the perimeter wall 476 defines first and second cooling passages 477, 479 with the interior wall 478. The first and second cooling passages 477, 479 are arranged in a switch back configuration, and one of the passages may provide a film cooling hole 474. The standoff 472 interconnects a central wall 473, which splits the channel to increase hot wall contact and maintain flow speed and pressure.

Referring to the airfoil 526 of Figure 8, the first cooling passage 566 is arranged adjacent to the perimeter wall 576 at the leading edge 530. The third cooling passage 570 is arranged between the perimeter wall 576 and the interior wall 578 to provide a microcircuit of less than 1.52 mm (0.060 inch) thickness, interconnecting the first and second cooling passages 566, 568 to one another.

The core geometries and associated airfoil cooling passages disclosed in Figures 3A-8 may be difficult to form using conventional casting technologies. Thus, an additive manufacturing process 80 is used, as schematically illustrated in Figure 9. Powdered metal 82 suitable for refractory metal core applications, such as molybdenum, is fed to a machine 84, which may provide a vacuum, for example. The machine 84 deposits multiple layers of powdered metal onto one another. The layers are joined to one another with reference to CAD data 86, which relates to a particular cross-section of the core 40. In one example, the powdered metal 82 may be melted using a direct metal laser sintering process or an electron-beam melting process. With the layers built upon one another and joined to one another cross-section by cross-section, a core with the above-described geometries may be produced, as indicated at 88. A single piece core can be produced that requires no assembly and can be directly placed into a mold after being coated with wax.

The coating 90 may be applied to the exterior surface of the core 40, which enables the core 40 to be more easily removed subsequently. The core 40 is arranged in a multi-piece mold and held in a desired orientation by features on the mold, as indicated at 92. The core 40 is more robust and can better withstand handling as it is positioned within the mold. The airfoil 26 is cast about the core 40, as indicated at 94. The core 40 is then removed from the airfoil 26, as indicated at 96, to provide desired cooling passage features.

An additive manufacturing process 180 may be used to produce an airfoil, as schematically illustrated in Figure 10. Powdered metal 182 suitable for aerospace airfoil applications is fed to a machine 184, which may provide a vacuum, for example. The machine 184 deposits multiple layers of powdered metal onto one another. The layers are joined to one another with reference to CAD data 186, which relates to a particular cross-section of the airfoil 20. In one example, the powdered metal 182 may be melted using a direct metal laser sintering process or an electron-beam melting process. With the layers built upon one another and joined to one another cross-section by cross-section, an airfoil with the above-described geometries may be produced, as indicated at 194. The airfoil may be post-processed 196 to provide desired structural characteristics. For example, the airfoil may be heated to reconfigure the joined layers into a single crystalline structure.

Although an example embodiment has been disclosed, a worker of ordinary skill in this art would recognize that certain modifications would come within the scope of the claims. For that reason, the following claims should be studied to determine their true scope and content.

## Claims

1. A core (340) for an airfoil (326) comprising a refractory metal structure having a variable thickness, wherein the structure is a unitary body having uniform material properties throughout the structure, the structure having at least one portion with a thickness of less than 1.52 mm (0.060 inch), **characterised in that**:
the structure includes a first portion (77) and a second portion (79) in spaced apart and overlapping relationship with one another, wherein the structure is tapered between first and second portions (77, 79), with the second portion (79) having a thickness less than 0.51 mm (0.020 inch), and the structure includes a standoff (72) interconnecting the first and second portions (77, 79).

2. The core according to claim 1, wherein the structure includes molybdenum.

3. The core according to claim 1 or 2, wherein the structure is defined by an exterior surface (360) providing a contour, the exterior surface (360) including a uniform surface finish.

4. The core according to claim 3, wherein the structure includes a radiused edge (48).

5. The core according to claim 3 or 4, wherein the exterior surface (360) is without machining.

6. The core according to claim 5, comprising a coating (90) adhered to the exterior surface (360).

7. The core according to claim 1 or 2, wherein the structure is defined by an exterior surface (360) including a perimeter (58), and includes a recess (54) inboard of the perimeter (58).

8. The core according to claim 1 or 2, wherein the structure is defined by an exterior surface (360) including a perimeter (58), and includes a protrusion (56) inboard of the perimeter (58).

9. The core according to any preceding claim, wherein the first portion has a thickness greater than 0.51 mm (0.020 inch).

10. The core according to any preceding claim, wherein one of the first and second portions has a thickness of less than 1.52 mm (0.060 inch).

11. A method of manufacturing a refractory metal core (340) for an airfoil (326) according to any preceding claim, comprising the steps of:
depositing multiple layers of powdered metal onto one another;
joining the layers to one another with reference to CAD data relating to a particular cross-section of a refractory metal core (340); and
producing a core (340) with a structure having a variable thickness, wherein the structure is a unitary body having uniform material properties throughout the structure, the structure having at least one portion with a thickness of less than 1.52 mm (0.060 inch),
**characterised in that**:
the structure includes a first portion (77) and a second portion (79) in spaced apart and overlapping relationship with one another, wherein the structure is tapered between first and second portions (77, 79), with the second portion (79) having a thickness less than 0.51 mm (0.020 inch), and the structure includes a standoff (72) interconnecting the first and second portions (77, 79).

## Patentansprüche

1. Kern (340) für ein Schaufelprofil (326), eine hochschmelzende Metallstruktur umfassend, die eine variable Dicke aufweist, wobei die Struktur ein einheitlicher Körper ist, der gleichförmige Materialeigenschaften die ganze Struktur hindurch aufweist, wobei die Struktur mindestens einen Abschnitt mit einer Dicke von weniger als 1,52 mm (0,060 Zoll) aufweist, **dadurch gekennzeichnet, dass**:
die Struktur einen ersten Abschnitt (77) und einen zweiten Abschnitt (79) in beabstandetem und überlappendem Verhältnis miteinander beinhaltet, wobei sich die Struktur zwischen dem ersten und dem zweiten Abschnitt (77, 79) verjüngt, wobei der zweite Abschnitt (79) eine Dicke von weniger als 0,51 mm (0,020 Zoll) aufweist, und die Struktur einen Abstandsbolzen (72) beinhaltet, der den ersten und den zweiten Abschnitt (77, 79) miteinander verbindet.

2. Kern nach Anspruch 1, wobei die Struktur Molybdän beinhaltet.

3. Kern nach Anspruch 1 oder 2, wobei die Struktur durch eine Außenfläche (360) definiert ist, die eine Kontur bereitstellt, wobei die Außenfläche (360) eine gleichförmige Oberflächengüte beinhaltet.

4. Kern nach Anspruch 3, wobei die Struktur eine abgerundete Kante (48) beinhaltet.

5. Kern nach Anspruch 3 oder 4, wobei die Außenfläche (360) nicht spangebend bearbeitet ist.

6. Kern nach Anspruch 5, eine Beschichtung (90) umfassend, die an die Außenfläche (360) angehaftet ist.

7. Kern nach Anspruch 1 oder 2, wobei die Struktur durch eine Außenfläche (360) definiert ist, die einen Umfang (58) beinhaltet, und eine Vertiefung (54) innenliegend des Umfangs (58) beinhaltet.

8. Kern nach Anspruch 1 oder 2, wobei die Struktur durch eine Außenfläche (360) definiert ist, die einen Umfang (58) beinhaltet, und einen Vorsprung (56) innenliegend des Umfangs (58) beinhaltet.

9. Kern nach einem der vorstehenden Ansprüche, wobei der erste Abschnitt eine Dicke aufweist, die größer als 0,51 mm (0,020 Zoll) ist.

10. Kern nach einem der vorstehenden Ansprüche, wobei einer aus dem ersten und dem zweiten Abschnitt eine Dicke von weniger als 1,52 mm (0,060 Zoll) aufweist.

11. Verfahren zum Herstellen eines hochschmelzenden Metallkerns (340) für ein Schaufelprofil (326) nach einem der vorstehenden Ansprüche, die folgenden Schritte umfassend:
Anordnen mehrerer Schichten von Metallpulver aufeinander;
Verbinden der Schichten miteinander mit Bezug auf CAD-Daten bezüglich eines bestimmten Querschnitts eines hochschmelzenden Metallkerns (340); und
Herstellen eines Kerns (340) mit einer Struktur, die eine variable Dicke aufweist, wobei die Struktur ein einheitlicher Körper ist, der gleichförmige Materialeigenschaften die ganze Struktur hindurch aufweist, wobei die Struktur mindestens einen Abschnitt mit einer Dicke von weniger als 1,52 mm (0,060 Zoll) aufweist, **dadurch gekennzeichnet, dass**:
die Struktur einen ersten Abschnitt (77) und einen zweiten Abschnitt (79) in beabstandetem und überlappendem Verhältnis miteinander beinhaltet, wobei sich die Struktur zwischen dem ersten und dem zweiten Abschnitt (77, 79) verjüngt, wobei der zweite Abschnitt (79) eine Dicke von weniger als 0,51 mm (0,020 Zoll) aufweist, und die Struktur einen Abstandsbolzen (72) beinhaltet, der den ersten und den zweiten Abschnitt (77, 79) miteinander verbindet.

## Revendications

1. Noyau (340) pour une aube (326) comprenant une structure métallique réfractaire ayant une épaisseur variable, dans lequel la structure est un corps unitaire ayant des propriétés de matériau uniformes dans toute la structure, la structure ayant au moins une partie avec une épaisseur de moins de 1,52 mm (0,060 pouce)
**caractérisé en ce que** :
la structure inclut une première partie (77) et une seconde partie (79) espacées l'une de l'autre et se chevauchant l'une l'autre, dans lequel la structure est effilée entre les première et seconde parties (77, 79), la seconde partie (79) ayant une épaisseur inférieure à 0,51 mm (0,020 pouce),
et la structure inclut une entretoise (72) reliant les première et seconde parties (77, 79).

2. Noyau selon la revendication 1, dans lequel la structure inclut du molybdène.

3. Noyau selon la revendication 1 ou 2, dans lequel la structure est définie par une surface extérieure (360) fournissant un contour, la surface extérieure (360) incluant une finition de surface uniforme.

4. Noyau selon la revendication 3, dans lequel la structure inclut un bord arrondi (48).

5. Noyau selon la revendication 3 ou 4, dans lequel la surface extérieure (360) est sans usinage.

6. Noyau selon la revendication 5, comprenant un revêtement (90) collé à la surface extérieure (360).

7. Noyau selon la revendication 1 ou 2, dans lequel la structure est définie par une surface extérieure (360) incluant un périmètre (58), et inclut un évidement (54) à l'intérieur du périmètre (58).

8. Noyau selon la revendication 1 ou 2, dans lequel la structure est définie par une surface extérieure (360) incluant un périmètre (58), et inclut une saillie (56) à l'intérieur du périmètre (58).

9. Noyau selon une quelconque revendication précédente, dans lequel la première partie a une épaisseur supérieure à 0,51mm (0,020 pouce) .

10. Noyau selon une quelconque revendication précédente, dans lequel une des première et seconde parties a une épaisseur inférieure à 1,52 mm (0,060 pouce).

11. Procédé de fabrication d'un noyau métallique réfractaire (340) destiné à une aube (326) selon une quelconque revendication précédente, comprenant les étapes consistant à :
déposer des couches multiples de métal en poudre les unes sur les autres ;*
joindre les couches les unes aux autres en référence à des données CAO relatives à une section transversale particulière d'un noyau métallique réfractaire (340) ; et
produire un noyau (340) avec une structure ayant une épaisseur variable, dans lequel la structure est un corps unitaire ayant des propriétés de matériau uniformes dans toute la structure, la structure ayant au moins une partie avec une épaisseur inférieure à 1,52mm (0,060 pouce), **caractérisé en ce que** :
la structure inclut une première partie (77) et une seconde partie (79) espacées l'une de l'autre et se chevauchant l'une l'autre, dans lequel la structure est effilée entre les première et seconde parties (77, 79), la seconde partie (79) ayant une épaisseur inférieure à 0,51mm (0,020 pouce),
et la structure inclut une entretoise (72) reliant les première et seconde parties (77, 79).
